# DEMANDE DE BREVET EUROPEEN

(11) **EP 3 968 598 A1**
(43) Date de publication de la demande: **16.03.2022**
(21) Numéro de dépôt: 21192016.0
(22) Date de dépôt: 18.08.2021
(51) Int. Cl.: H04L 29/06

(54) **PROCÉDÉ ET PARE-FEU CONFIGURES POUR CONTRÔLER DES MESSAGES TRANSITANT ENTRE DEUX ÉLÉMENTS DE COMMUNICATION**

(30) Priorité: 14.09.2020 FR 2009292
(71) Demandeur: MBDA France, 92350 Le Plessis-Robinson (FR)
(72) Inventeur: Poinsard, Sylvain, 92350 LE PLESSIS ROBINSON (FR); Chevalier, Cédrick, 92350 LE PLESSIS ROBINSON (FR); Richer De Forges, Romain, 92350 LE PLESSIS ROBINSON (FR)
(74) Mandataire: Gevers & Orès

(57) **Abrégé**

- Procédé et pare-feu configurés pour contrôler des messages transitant entre deux éléments de communication.
- Le pare-feu (1) comporte une unité de vérification (7) pour comparer des messages transitant entre les deux éléments de communication à des données dites de référence contenues dans une base de données et pour détecter, le cas échéant, une absence de conformité d'un message en transit par rapport à ces données de référence, lesdites données de référence comprenant des messages prédéterminés et au moins des valeurs autorisées pour des champs de ces messages prédéterminés, une unité centrale (10) pour générer un signal d'alerte en cas de détection par l'unité de vérification (7) d'une absence de conformité d'un message en transit, et une interface de transmission (11) configurée pour transmettre tout signal d'alerte à destination au moins d'un dispositif de gestion de signaux d'alerte, qui va générer une action de protection appropriée lors de la génération d'un signal d'alerte.

## Description

### DOMAINE TECHNIQUE

La présente invention concerne un procédé et un pare-feu configurés pour contrôler des messages transitant entre deux éléments de communication.

### ÉTAT DE LA TECHNIQUE

Dans le cadre de la présente invention, on entend :
- par élément de communication, tout élément informatique tel qu'un ordinateur, un réseau informatique, ..., qui est apte à communiquer avec un autre élément informatique, en étant apte à transmettre et/ou à recevoir des messages ; et
- par message, un ensemble de données transmis d'un élément de communication à un autre.

On connaît différentes solutions de pare-feux applicatifs, comme des pare-feux de type WAF (« Web Applicative Firewall ») ou des pare-feux applicatifs à reconnaissance de « pattern ».

On connaît, en particulier, des pare-feux pour un modèle OSI (pour « Open System Interconnexion » en anglais). Ces pare-feux sont généralement, très performants sur les couches 2 à 6 du modèle OSI. Cependant pour les applications (à savoir la couche 7 du modèle OSI), les pare-feux usuels sont limités à une fonctionnalité dite de « pattern » ou de « signature ». Le traitement se limite à regarder le contenu du message uniquement pour savoir si une forme de signature existe ou non. Ils ne permettent pas de couvrir dans la grande profondeur le besoin en sécurité des applications les plus critiques.

Ces solutions usuelles de pare-feu ne sont donc pas satisfaisantes, en particulier pour la couche applicative d'un modèle de communication.

### EXPOSÉ DE L'INVENTION

La présente invention concerne un pare-feu configuré pour contrôler des messages transitant dans au moins un sens entre deux éléments de communication, par exemple deux réseaux informatiques ou un ordinateur et un réseau informatique, qui permet de remédier aux inconvénients précités, ledit pare-feu comportant des interfaces vers lesdits éléments de communication.

A cet effet, selon l'invention, ledit pare-feu comporte de plus :
- une unité de vérification configurée pour comparer des messages transitant entre les deux éléments de communication à des données dites de référence contenues dans au moins une base de données et pour détecter, le cas échéant, une absence de conformité d'un message en transit par rapport auxdites données de référence, lesdites données de référence comprenant des messages prédéterminés qui sont connus et au moins des valeurs autorisées pour des champs desdits messages prédéterminés. Avantageusement, les valeurs autorisées pour les champs des messages comprennent au moins certains des éléments suivants : des plages de valeurs, des valeurs minimales, des valeurs maximales, des types, des tailles, ... ;
- une unité centrale configurée pour générer un signal d'alerte en cas de détection par l'unité de vérification d'une absence de conformité d'un message en transit ; et
- au moins une interface de transmission configurée pour transmettre tout signal d'alerte qui est généré, à destination au moins d'un dispositif de gestion de signaux d'alerte.

Avantageusement, ledit pare-feu est configuré pour contrôler des messages d'une couche applicative d'un modèle de communication utilisé pour la communication entre les deux éléments de communication, en particulier une couche dite « 7 » d'un modèle OSI (pour « Open System Interconnexion » en anglais).

Ainsi, grâce à l'invention, ledit pare-feu (de type applicatif) permet de vérifier, en temps réel, la conformité du contenu des messages contrôlés par rapport à des données de référence prédéterminées (concernant des messages connus). Ces données de référence sont adaptées aux caractéristiques du système de communication considéré et aux données et informations destinées à être échangées par ce système de communication, comme précisé ci-dessous.

Le pare-feu vérifie ainsi chaque message en transit pour des messages parfaitement connus et déterminés. Le pare-feu est ainsi particulièrement bien appliqué au domaine industriel, lorsque les messages considérés (reçus et/ou émis) sont connus.

Dans un mode de réalisation préféré, ledit pare-feu est configuré pour contrôler les messages transitant dans les deux sens entre les deux éléments de communication.

En outre, de façon avantageuse, l'unité de vérification est configurée pour reconnaître, parmi les messages transitant entre les deux éléments de communication, les mêmes messages que ceux des données de référence, et l'unité de vérification est configurée pour comparer aux données de référence, uniquement les messages qui sont ainsi reconnus.

Par ailleurs, avantageusement, les données de référence contenues dans la base de données sont transcrites dans un format informatique exploitable par l'unité de vérification, de préférence un format XML.

Dans un mode de réalisation préféré, les données de référence sont représentatives des informations destinées à être échangées entre les éléments de communication. Par exemple, pour des éléments de communication dans une unité industrielle, il peut s'agir d'informations relatives à des produits fabriqués ou utilisés par cette unité industrielle ou à des informations destinées au fonctionnement ou à la gestion de cette unité industrielle.

La présente invention concerne également un système de communication comportant au moins un élément de communication. Selon l'invention, ledit système de communication comporte, de plus, au moins un pare-feu tel que celui décrit ci-dessus.

Avantageusement, le système de communication comporte, de plus, au moins une base de données contenant les données de référence, lesdites données de référence comprenant donc des messages prédéterminés et au moins des valeurs autorisées pour des champs desdits messages prédéterminés.

En outre, de façon avantageuse, le système de communication comporte, de plus, un dispositif de gestion de signaux d'alerte configuré pour générer une action en cas de réception d'un signal d'alerte du pare-feu.

Avantageusement, le dispositif de gestion de signaux d'alerte est configuré pour ne pas laisser passer un message non conforme détecté. Dans le cadre de la présente invention, d'autres actions sont envisageables, comme précisé ci-dessous.

Dans un mode de réalisation particulier, le dispositif de gestion de signaux d'alerte est configuré pour pouvoir générer une pluralité d'actions différentes possibles et pour générer, le cas échéant, parmi ladite pluralité d'actions possibles, une action dépendant du message non conforme détecté.

Par ailleurs, dans un mode de réalisation particulier, le système de communication comporte également au moins un pare-feu auxiliaire usuel.

La présente invention concerne, en outre, un réseau de communication qui comprend au moins ledit pare-feu et lesdits deux éléments de communication.

La présente invention concerne également un procédé de traitement et de filtrage de messages transitant dans au moins un sens entre deux éléments de communication.

Selon l'invention, ledit procédé comprend au moins :
- une étape de vérification, mise en œuvre par une unité de vérification, consistant à comparer des messages transitant entre les deux éléments de communication à des données dites de référence contenues dans une base de données, et à détecter, le cas échéant, une absence de conformité d'un message en transit par rapport auxdites données de référence, lesdites données de référence comprenant des messages prédéterminés connus et au moins des valeurs autorisées pour des champs desdits messages prédéterminés ; et
- une étape d'alerte, mise en œuvre par une unité centrale, consistant à générer un signal d'alerte en cas de détection d'une absence de conformité par l'unité de traitement.

Avantageusement, ledit procédé comprend, de plus, une étape de protection, mise en œuvre par un dispositif de gestion de signaux d'alerte, consistant à mettre en œuvre une action, notamment une action de protection, en cas de génération d'un signal d'alerte à l'étape d'alerte.

De plus, de façon avantageuse, l'étape de vérification comprend :
- une sous-étape d'identification consistant à reconnaître, parmi les messages transitant entre les deux éléments de communication, les messages correspondant aux données de référence ; et
- une sous-étape de comparaison consistant à comparer aux données de référence de ladite base de données, uniquement les messages qui sont ainsi reconnus.

### BRÈVE DESCRIPTION DES FIGURES

Les figures du dessin annexé feront bien comprendre comment l'invention peut être réalisée. Sur ces figures, des références identiques désignent des éléments semblables.
La figure 1 est le schéma synoptique d'un réseau de communication pourvu d'un pare-feu conforme à l'invention.
La figure 2 montre schématiquement un mode de réalisation particulier d'un pare-feu conforme à l'invention.
La figure 3 illustre schématiquement les étapes principales d'un procédé de traitement et de filtrage de messages, mis en œuvre à l'aide d'un pare-feu conforme à l'invention.

### DESCRIPTION DÉTAILLÉE

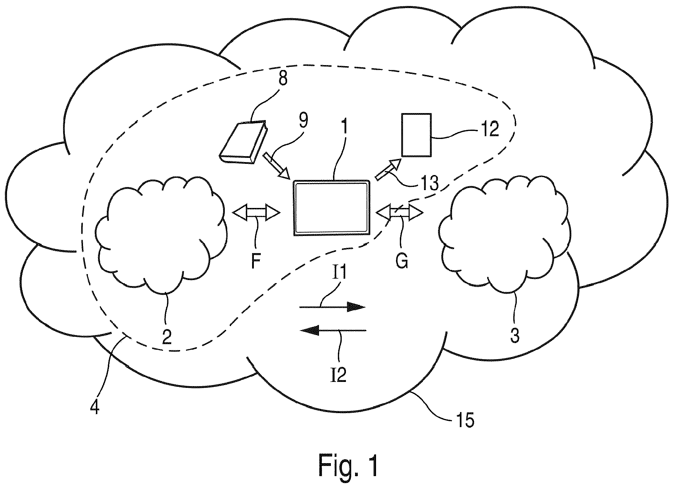

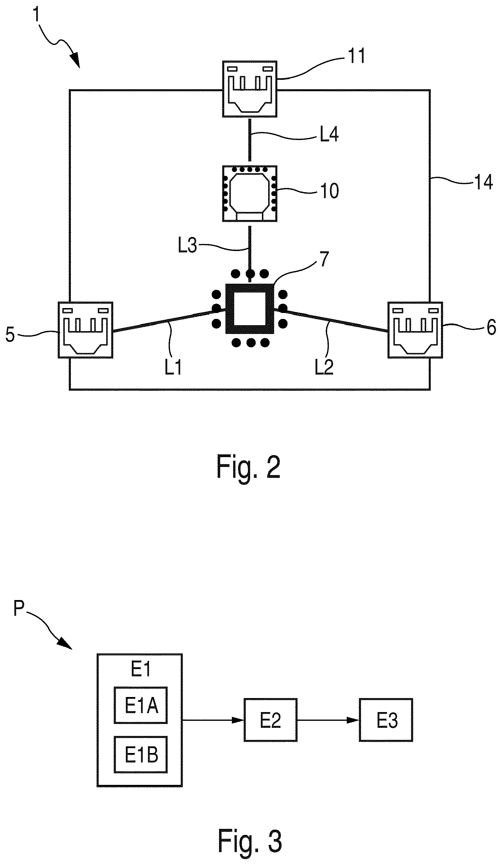

Le pare-feu 1 représenté schématiquement sur la figure 2 et permettant d'illustrer l'invention, est un dispositif informatique destiné à contrôler (ou surveiller) des messages transitant, selon au moins un sens (de communication) I1, I2, entre deux éléments de communication 2 et 3 représentés sur la figure 1. Dans le cadre de la présente invention, un élément de communication peut correspondre à tout élément informatique (tel qu'un ordinateur, un réseau informatique par exemple un réseau informatique local LAN (pour « Local Area Network » en anglais) ...,) qui est apte à communiquer avec un autre élément informatique, c'est-à-dire qui est apte à transmettre et/ou à recevoir des messages de ce dernier.

Le pare-feu 1 comporte des interfaces 5 et 6 (représentées sur la figure 2) permettant de le relier (de façon usuelle), respectivement, aux éléments de communication 2 et 3.

Dans un mode de réalisation particulier, ledit pare-feu 1 est configuré pour contrôler les messages transitant dans un seul sens I1 ou I2 entre les deux éléments de communication 2 et 3. A titre d'illustration, il peut s'agir des messages émis par l'élément de communication 3, par exemple un réseau informatique externe à un organisme ou à une entité locale telle qu'une entreprise, à destination de l'élément de communication 2, par exemple un ordinateur ou un réseau de l'entité locale, dans le but de protéger l'élément de communication 2 contre un message non autorisé qui pourrait être potentiellement malveillant et correspondre, notamment, à une tentative d'intrusion.

Dans un mode de réalisation préféré, représenté sur le figure 1, ledit pare-feu 1 est ainsi un élément de sécurité destiné, en premier lieu, à protéger l'élément de communication 2, contre des tentatives d'intrusion malveillantes provenant de l'élément de communication 3. Pour ce faire, il fait partie d'un système de communication 4 comprenant, notamment, ledit l'élément de communication 2 et ledit pare-feu 1.

Par ailleurs, dans une variante préférée de ce mode de réalisation préféré, ledit pare-feu 1 est configuré pour contrôler les messages transitant dans les deux sens I1 et I2 entre les deux éléments de communication 2 et 3, comme illustré par des doubles flèches F et G sur la figure 1, pour protéger les deux éléments de communication 2 et 3, l'un de l'autre.

Dans un mode de réalisation particulier, le pare-feu 1 et les deux éléments de communication 2 et 3 peuvent faire partie d'un réseau de communication 15, par exemple un réseau (de communication) militaire.

Le pare-feu 1 comporte, comme représenté sur la figure 2, sur une carte électronique 14, en plus des interfaces 5 et 6 :
- une unité de vérification (ou de contrôle) 7, par exemple un circuit intégré programmable de type FGPA (« Field-Programmable Gâte Array » en anglais), qui est configurée (et programmée) pour comparer des messages transitant entre les deux éléments de communication 2 et 3 à des données dites de référence d'une base de données 8. Ces données de référence (concernant des messages connus) sont reçues par le pare-feu 1 de la base de données 8, par l'intermédiaire d'une liaison 9, comme représenté sur la figure 1. Par la comparaison de chaque message (qui est pris en compte) avec lesdites données de référence, l'unité de vérification 7 est en mesure de détecter, si cela est le cas, toute absence de conformité d'un message en transit par rapport à ces données de référence. En particulier, les valeurs autorisées pour les champs des messages peuvent comprendre au moins certains des éléments suivants : des plages de valeurs, des valeurs minimales, des valeurs maximales, des types, des tailles, ... ;
- une unité centrale 10, par exemple un processeur ou unité centrale de traitement de type CPU (pour « Central Processing Unit » en anglais), qui est configurée pour générer un signal d'alerte en cas de détection par l'unité de vérification 7 d'une absence de conformité d'un message en transit ; et
- au moins une interface de transmission 11 configurée pour transmettre tout signal d'alerte généré par l'unité centrale 10, à destination d'au moins un dispositif utilisateur, et notamment d'un dispositif 12 de gestion de signaux d'alerte, comme précis ci-dessous.

L'unité de vérification 7 est configurée pour pouvoir reconnaître (ou identifier), parmi les messages transitant entre les deux éléments de communication 2 et 3, les messages de même type (par exemple de même protocole) que ceux qui sont enregistrés dans la base de données 8. L'unité de vérification 7 compare aux données de référence de ladite base de données 8, uniquement le contenu des messages (en transit entre les deux éléments de communication 2 et 3) qui sont ainsi préalablement reconnus.

En plus de générer les signaux d'alerte, l'unité centrale 10 est également configurée pour permettre la gestion de l'unité de vérification 7 et le téléchargement des données de référence de la base de données 8.

Comme représenté sur la figure 2, l'unité de vérification 7 est reliée par l'intermédiaire de liaisons L1, L2 et L3 respectivement à l'interface 5, à l'interface 6 et à l'unité centrale 10, et l'unité centrale 10 est reliée par l'intermédiaire d'une liaison L4 à l'interface de transmission 11. Ces liaisons L1 à L4 permettent la communication de données entre les éléments reliés ensemble.

Les interfaces 5 et 6 sont chargées de transmettre et recevoir les messages qui passent à travers le pare-feu 1, en provenance ou à destination respectivement de l'élément de communication 2 et de l'élément de communication 3.

Le système de communication 4 comporte également une base de données 8, de préférence externe à la carte électronique 14, qui contient les données de référence précitées. Les données de référence comprennent au moins :
- une liste de l'ensemble des messages possibles (qui peuvent donc être traités par le pare-feu 1) ;
- l'ensemble des valeurs possibles, c'est-à-dire autorisées, pour chacun des champs qui composent chaque message.

Dans un mode de réalisation particulier, le pare-feu 1 peut également comporter plusieurs bases de données 8, dont chacune comporte par exemple des données relatives à des messages à chaque fois d'un type particulier, qui sont par exemple destinés à un projet particulier ou à un produit particulier. On entend par base de données, tout moyen électronique tel qu'une mémoire par exemple, qui fait partie du système de communication 4 et qui permet de stocker l'ensemble des données nécessaires pour permettre à l'unité de vérification 7 de réaliser les comparaisons envisagées.

Ainsi, ledit pare-feu 1 permet de vérifier, en temps réel, la conformité du contenu des messages contrôlés par rapport à des données de référence prédéterminées. Ces données de référence sont adaptées aux données échangées par le système de communication 4. Le pare-feu 1 vérifie ainsi chaque message en transit pour des messages parfaitement connus et déterminés.

En particulier, les messages (contrôlés par le pare-feu 1) sont parfaitement connus, et le contenu possible de chacun de ces messages est précisément identifié, par exemple, dans des documents d'interface utilisés pour définir ou mettre à jour les données de référence contenues dans la base de données 8. Ils peuvent dépendre, notamment, des données et informations que l'on envisage que le système de communication 4 va échanger. Les documents spécifiant les interfaces et donc les messages à utiliser pour le système de communication 4 permettent d'établir de manière précise une liste de messages susceptibles d'être utilisés et l'ensemble des valeurs possibles pour chaque champ de ces messages. Le pare-feu 1 est donc particulièrement bien adapté au domaine industriel, et plus précisément dans les entreprises ou les secteurs d'activité dans lesquels les messages échangés sont parfaitement connus.

Le pare-feu 1 peut donc lire précisément chaque message et vérifier si les valeurs qui le composent dans les différents champs font partie des valeurs possibles, et si ce message est donc conforme ou non.

Pour ce faire, les données de référence de la base de données 8 sont transcrites dans un format informatique exploitable par l'unité de vérification 7 du pare-feu 1, de préférence un format XML.

Les fichiers XML (pour « Extensible Markup Language » en anglais, à savoir langage de balisage extensible) sont de simples documents texte qui utilisent des balises personnalisées pour décrire et structurer des données. Le format de message XML utilisé permet de décrire les messages qui doivent être analysés au niveau applicatif. Il contient la description des différents champs de chaque message (en précisant notamment des valeurs minimales, des valeurs maximales, des types, des tailles) qui sont spécifiés dans les documents d'interface.

La présente invention peut être appliquée à différents types de protocoles, par exemple des protocoles de type TCP (pour « Transmission Control Protocol » anglais) ou de type UDP (pour « User Datagram Protocol » en anglais).

Le pare-feu 1 est de type applicatif. Il est configuré pour contrôler des messages d'une couche applicative d'un modèle de communication utilisé pour la communication entre les deux éléments de communication 2 et 3.

De préférence, le pare-feu 1 est configuré pour contrôler des messages de la couche 7 du modèle OSI. Le modèle OSI qui représente une norme de communication, en réseau, des systèmes informatiques, comporte sept couches. La couche 7 qui est une couche d'application est le point d'accès aux services réseaux. Dans le cadre de la présente invention, le pare-feu 1 peut également s'appliquer à la couche applicative d'un modèle de communication autre que le modèle OSI.

Le système de communication 4 comporte, de plus, un dispositif 12 de gestion de signaux d'alerte, par exemple de type SIEM (pour « Security Information and Event Management » en anglais, à savoir gestion de l'information et des événements de sécurité), qui est configuré pour générer une action, notamment une action de protection, en cas de réception d'un signal d'alerte. A cet effet, le dispositif 12 est lié par l'intermédiaire d'une liaison 13 (figure 1) à l'interface de transmission 11 qui est en lien avec l'unité centrale 10 (génératrice de signaux d'alerte) via la liaison L4 (figure 2).

Dans un mode de réalisation préféré, le dispositif 12 de gestion de signaux d'alerte est configuré pour agir, de façon usuelle, en ne laissant pas passer un message non conforme. Ainsi :
- un message reçu de l'élément de communication 3, qui est détecté comme non conforme par le pare-feu 1 n'est pas transmis à l'élément de communication 2 (et donc au système de communication 4) pour le protéger contre une éventuelle tentative d'intrusion ;
- et inversement (dans le mode de réalisation préféré d'une surveillance dans les deux sens de communication), un message émis par l'élément de communication 2 (et donc par le système de communication 4), qui est détecté comme non conforme par le pare-feu 1, n'est pas transmis à l'élément de communication 3.

Dans le cadre de la présente invention, d'autres actions (commandées ou gérées par le dispositif 12) sont envisageables en cas de détection d'un message non conforme. A titre d'illustration, il peut s'agir de la suppression du message, de l'archivage du message, de la transmission du message à un élément d'analyse (pour l'analyser), de la coupure de toute transmission ultérieure entre les éléments de communication 2 et 3, d'opérations complexes sur les signaux d'alerte (telles que des corrélations dans le temps par exemple),

Dans un mode de réalisation particulier, le dispositif 12 de gestion de signaux d'alerte est configuré pour générer une action qui dépend du message non conforme détecté. On prévoit donc une pluralité d'actions différentes possibles, et lorsqu'un message est considéré comme non conforme, on met en œuvre au moins une action (parmi lesdites actions possibles) qui dépend dudit message. Ces actions peuvent, par exemple, dépendre du type de système de communication 4, auquel est appliqué le pare-feu 1, ou de la nature des données échangées par le système de communication 4.

Par ailleurs, dans un mode de réalisation particulier, le système de communication 4 comporte, en plus du pare-feu 1, un ou de préférence une pluralité de pare-feux auxiliaires usuels (non représentés). Il peut notamment s'agir d'un ou de plusieurs pare-feux usuels qui sont conçus pour analyser des messages qui ne sont pas reconnus par l'unité de vérification 7 et qui ne sont donc pas contrôlés par le pare-feu 1.

En particulier, il peut s'agir d'un ou de plusieurs pare-feux usuels qui sont conçus pour protéger les couches 2 à 6 du modèles OSI, et qui sont ainsi complémentaires du pare-feu 1 lorsqu'il est destiné à protéger la couche 7 du modèle OSI. Dans ce mode de réalisation particulier, le système de communication 4 dispose ainsi de protections efficaces contre l'ensemble des couches 2 à 7 du modèle OSI.

Le pare-feu 1, tel que décrit ci-dessus, faisant partie du système de communication 4, permet de mettre en œuvre un procédé P de traitement et de filtrage de messages transitant dans au moins un sens (de communication) entre les deux éléments de communication 2 et 3 ou dans les deux sens.

Pour ce faire, ce procédé P comprend, comme représenté sur la figure 3:
- une étape de vérification E1, mise en œuvre par l'unité de vérification 7, consistant à comparer des messages transitant entre les deux éléments de communication 2 et 3 aux données de référence de la base de données 8, et à détecter, le cas échéant, une absence de conformité d'un message en transit par rapport auxdites données de référence. Les données de référence comprennent des messages prédéterminés qui sont connus et des valeurs autorisées pour des champs desdits messages prédéterminés ;
- une étape d'alerte E2, mise en œuvre par l'unité centrale 10, consistant à générer un signal d'alerte en cas de détection d'une absence de conformité par l'unité de vérification 7 à l'étape de vérification E1 ; et
- une étape de protection E3, mise en œuvre par le dispositif 12 de gestion de signaux d'alerte, consistant à générer une action en cas de génération d'un signal d'alerte par l'unité centrale 10 à l'étape d'alerte E2.

De plus, l'étape de vérification E1, mise en œuvre par l'unité de vérification 7, comprend :
- une sous-étape d'identification E1A consistant à reconnaître et identifier, parmi les messages transitant entre les deux éléments de communication 2 et 3, les messages qui font partie des données de référence de la base de données 8 ; et
- une sous-étape de comparaison E1B consistant à comparer auxdites données de référence de la base de données 8, uniquement les messages qui sont ainsi reconnus et identifiés.

Par conséquent, l'unité de vérification 7 essaie de reconnaître et identifier tous les messages en transit entre les éléments de communication 2 et 3. Un message qui n'est pas reconnu par l'unité de vérification 7 ne sera pas contrôlé par cette dernière, et il sera donc autorisé à passer à travers le pare-feu 1. Ce message pourra être contrôlé par d'autres pare-feux usuels du système de communication 4 qui se chargeront de décider s'il est conforme ou non à la politique de sécurité en vigueur. Il sera alors soit bloqué par ce pare-feu usuel, soit laissé passer.

En revanche, un message qui est reconnu par l'unité de vérification 7 sera contrôlé par cette dernière qui émettra un signal d'alerte en cas d'absence de conformité de ce message contrôlé avec les données de référence correspondantes. Dans un tel cas, le dispositif 12 de gestion de signaux d'alerte générera une action appropriée. En particulier, il empêchera le message d'être communiqué à l'élément de communication 2, 3 qui est destinataire.

Le pare-feu 1 et le procédé P, tels que décrits ci-dessus, peuvent être utilisés dans beaucoup d'applications différentes. En particulier, ils sont particulièrement bien adaptés au domaine industriel (aviation, militaire, ...), dans des entreprises ou des secteurs d'activité où les messages échangés sont parfaitement connus.

Dans le domaine miliaire, le pare-feu 1 peut notamment être utilisé en complément des pare-feux usuels afin de disposer d'une protection efficace permettant des surveillances des flux de communication, en entrée et sortie de systèmes militaires tels qu'un centre de commandement, un poste de préparation de mission, un lanceur, ....

## Revendications

1. Pare-feu configuré pour contrôler des messages transitant dans au moins un sens (I1, I2) entre deux éléments de communication (2, 3), ledit pare-feu (1) comportant :
- des interfaces (5, 6) vers lesdits éléments de communication (2, 3) ;
- une unité de vérification (7) configurée pour comparer des messages transitant entre les deux éléments de communication (2, 3) à des données et pour détecter, le cas échéant, une absence de conformité d'un message en transit par rapport auxdites données ; et
- une unité centrale (10) configurée pour générer un signal d'alerte en cas de détection par l'unité de vérification (7) d'une absence de conformité d'un message en transit,
**caractérisé en ce que** :
- l'unité de vérification (7) est configurée pour comparer les messages transitant entre les deux éléments de communication (2, 3) à des données dites de référence qui sont contenues dans au moins une base de données (8) et pour détecter, le cas échéant, une absence de conformité d'un message en transit par rapport auxdites données de référence, lesdites données de référence comprennent des messages prédéterminés qui sont connus et au moins des valeurs autorisées pour des champs desdits messages prédéterminés ;
- l'unité de vérification (7) est configurée pour reconnaître, parmi les messages transitant entre les deux éléments de communication (2, 3), les mêmes messages que ceux des données de référence, et pour comparer aux données de référence, uniquement les messages qui sont ainsi reconnus ; et
- le pare-feu (1) comporte de plus au moins une interface de transmission (11) configurée pour transmettre tout signal d'alerte à destination au moins d'un dispositif (12) de gestion de signaux d'alerte.

2. Pare-feu selon la revendication 1,
**caractérisé en ce qu'**il est configuré pour contrôler des messages d'une couche applicative d'un modèle de communication utilisé pour la communication entre les deux éléments de communication (2, 3).

3. Pare-feu selon l'une des revendications 1 et 2,
**caractérisé en ce qu'**il est configuré pour contrôler les messages transitant dans les deux sens (I1, I2) entre les deux éléments de communication (2, 3).

4. Pare-feu selon l'une quelconque des revendications précédentes, **caractérisé en ce que** les données de référence sont transcrites dans un format informatique exploitable par l'unité de vérification (7).

5. Pare-feu selon l'une quelconque des revendications précédentes, **caractérisé en ce que** les données de référence sont représentatives des informations destinées à être échangées entre les éléments de communication (2, 3).

6. Système de communication comportant au moins un élément de communication (2),
**caractérisé en ce qu'**il comporte, de plus, au moins un pare-feu (1) selon l'une quelconque des revendications 1 à 5.

7. Système de communication selon la revendication 6,
**caractérisé en ce qu'**il comporte au moins une base de données (8) contenant des données de référence, lesdites données de référence comprenant des messages prédéterminés et au moins des valeurs autorisées pour des champs desdits messages prédéterminés.

8. Système de communication selon l'une des revendications 6 et 7, **caractérisé en ce qu'**il comporte, de plus, un dispositif (12) de gestion de signaux d'alerte configuré pour générer une action en cas de réception d'un signal d'alerte du pare-feu (1).

9. Système de communication selon la revendication 8,
**caractérisé en ce que** le dispositif (12) de gestion de signaux d'alerte est configuré pour ne pas laisser passer un message non conforme détecté.

10. Système de communication selon l'une des revendications 8 et 9, **caractérisé en ce que** le dispositif (12) de gestion de signaux d'alerte est configuré pour générer une action dépendant du message non conforme détecté.

11. Système de communication selon l'une quelconque des revendications 6 à 10,
**caractérisé en ce qu'**il comporte au moins un pare-feu auxiliaire.

12. Procédé de contrôle et de filtrage de messages transitant dans au moins un sens entre deux éléments de communication (2, 3),
ledit procédé comprenant au moins :
- une étape de vérification (E1), mise en œuvre par une unité de vérification (7), consistant à comparer des messages transitant entre les deux éléments de communication (2, 3) à des données dites de référence contenues dans une base de données (8), et à détecter, le cas échéant, une absence de conformité d'un message en transit par rapport auxdites données de référence, lesdites données de référence de la base de données (8) comprenant des messages prédéterminés qui sont connus et au moins des valeurs autorisées pour des champs desdits messages prédéterminés, l'étape de vérification (E1) comprenant une sous-étape d'identification (E1A) consistant à reconnaître, parmi l'ensemble des messages transitant entre les deux éléments de communication (2, 3), les messages correspondant aux données de référence, et une sous-étape de comparaison (E1B) consistant à comparer aux données de référence de ladite base de données (8), uniquement les messages qui sont ainsi reconnus ; et
- une étape d'alerte (E2), mise en œuvre par une unité centrale (10), consistant à générer un signal d'alerte en cas de détection d'une absence de conformité par l'unité de vérification (7).

13. Procédé selon la revendication 12,
**caractérisé en ce qu'**il comprend, de plus, une étape de protection (E3), mise en œuvre par un dispositif (12) de gestion de signaux d'alerte, consistant à mettre en œuvre une action en cas de génération d'un signal d'alerte à l'étape d'alerte (E2).
